# EUROPÄISCHE PATENTSCHRIFT

(11) **EP 4 567 542 B1**
(45) Veröffentlichungstag und Bekanntmachung des Hinweises auf die Patenterteilung: **02.09.2026**
(21) Anmeldenummer: 24215693.3
(22) Anmeldetag: 27.11.2024
(51) Int. Cl.: G05D 1/244, G05D 1/246, G05D 1/698, G05D 1/646

(54) **TRANSPORTROBOTER SOWIE VERFAHREN UND SYSTEM ZUM BETREIBEN EINES SOLCHEN TRANSPORTROBOTERS IN EINEM WARENLAGER**
TRANSPORT ROBOT AND METHOD AND SYSTEM FOR OPERATING SUCH A TRANSPORT ROBOT IN A WAREHOUSE
ROBOT DE TRANSPORT AINSI QUE PROCÉDÉ ET SYSTÈME DE FONCTIONNEMENT D'UN TEL ROBOT DE TRANSPORT DANS UN ENTREPÔT DE MARCHANDISES

(30) Priorität: 06.12.2023 DE 102023134148
(43) Veröffentlichungstag der Anmeldung: 11.06.2025
(73) Patentinhaber: STILL GmbH, 22113 Hamburg (DE)
(72) Erfinder: Viereck, Volker, 23898 Kühsen (DE); Krueger-Basjmeleh, Tino, 25469 Halstenbek (DE)
(74) Vertreter: Patentship Patentanwaltgesellschaft

(56) Entgegenhaltungen:
- DE-A1- 102021 006 476
- RAFFLIN C ET AL: "LEARNING WITH A FRIENDLY INTERACTIVE ROBOT FOR SERVICE TASKS IN HOSPITAL ENVIRONMENTS", PROCEEDINGS OF THE 1995 IEEE/RSJ INTERNATIONAL CONFERENCE ON INTELLIGENT ROBOTS AND SYSTEMS. IROS 95. HUMAN ROBOT INTERACTION AND COOPERATIVE ROBOTS. PITTSBURGH, AUG. 5 - 9, 1995; [PROCEEDINGS OF THE IEEE/RSJ INTERNATIONAL CONFERENCE ON INTELLIGENT R, 5 August 1995 (1995-08-05), pages 492 - 497, XP000730953, ISBN: 978-0-7803-3006-1, DOI: 10.1109/IROS.1995.525930

## Beschreibung

Die Erfindung betrifft einen Transportroboter sowie ein Verfahren und System zum Betreiben eines solchen Transportroboters in einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger, z.B. in der Intralogistik, d.h. dem innerbetrieblichen Materialfluss, z.B. in einem Warenlager, werden Flurförderzeuge, z.B. Gabelstapler, Transportroboter und dergleichen eingesetzt. Ein Warenlager ist in der Regel ein sehr dynamisches Umfeld, in dem die Steuerung der mobilen Flurförderzeuge in der Regel entweder manuell, teilautomatisiert oder automatisiert erfolgt.

In der Intralogistik erzeugt das starke Wachstum in Verbindung mit dem demographischen Wandel einen Bedarf nach automatisierten Lösungen. Die Einführung neuer, komplexer digitaler Technologien wird jedoch dadurch erschwert, dass Beschäftigte mit einer hohen Personalqualifikation im Bereich der Intralogistik oftmals unterrepräsentiert sind.

Bisherige Automatisierungslösungen für den Stückguttransport in der Intralogistik stützen sich im Wesentlichen auf Stetigförderer, Regalbediengeräte und fahrerlose Transportsysteme (FTS). Finden Stetigförderer und Regalbediengeräte überall dort ihren Einsatz, wo vordergründig starre Prozessketten und hohe Materialdurchsätze gefragt sind, bieten FTS mehr Einsatzmöglichkeiten in der Intralogistik.

Die teilweise zurückhaltende Einführung der bisherigen Automatisierungslösungen liegt neben den hohen Investitionskosten, die mit den bisherigen Automatisierungslösungen verbunden sind, an dem erhöhten Flächenbedarf und häufig an der für manuelle Prozesse aufgebauten Infrastruktur. Automatisierungslösungen wie FTS werden überdies auf vordefinierten Routen für den Transport betrieben. Bei Anpassungen am Transportlayout müssen diese jeweils neu projektiert werden, was zu einer geringeren Flexibilität führt. Somit stehen für eine Vielzahl potenzieller weiterer Anwendungsgebiete mit höherem Flexibilitätsbedarf entweder keine wirtschaftlichen Lösungen bereit oder die aktuellen technischen Lösungen stoßen durch ihre Veränderungsdynamik auf hohe Neuprojektierungskosten. Dies führt dazu, dass bisherige Automatisierungslösungen gegenüber manuell orientierten Transportlösungen nur ein Nischendasein pflegen. Autonome Mobile Roboter (im Englischen "Autonomous Mobile Robots"; AMRs) beispielsweise in Form von Transportrobotern zeichnen sich gegenüber FTS durch eine höhere Flexibilität aus. AMRs, die sich in einer Vielzahl offener Umgebungen bewegen und eine Vielzahl von Aufgaben und Interaktionen ausführen, benötigen jedoch dafür explizite Fähigkeiten, um ihre Aufgaben erfüllen zu können. AMRs interagieren sensormotorisch mit ihrer Umgebung und müssen bewusst handeln, um ihre Aufgabe zu erfüllen. Bewusstes Handeln bedeutet in diesem Zusammenhang, dass die AMRs Handlungen ausführen, die durch gegebene Ziele motiviert sind und durch umgebungsmodellabhängige Abwägungen im Hinblick auf diese Ziele gerechtfertigt und ggf. optimal sind. Diese deliberativen Fähigkeiten zeichnen AMRs gegenüber FTS aus.

Für einen automatischen Transport durch AMRs, insbesondere Transportroboter, muss jedoch das Wissen für die Erstellung der Fahrwege, Navigationskarten und die anschließenden Handlungen (beispielsweise Warenaufnahme, Warenabgabe, Warten, Laden und dergleichen) den AMRs vermittelt werden. Die Vermittlung dieses Wissens erfordert Eingriffe hoch spezialisierten Fachpersonals zur Adaption der AMRs an den späteren Einsatz. Dies macht den wesentlichen Teil der Inbetriebnahme- und Anpassungsaufwände aus und beschränkt auf Grund damit verbundener Kosten und Personalressourcen Handlungsfelder.

DE 10 2021 006 476 A1 betrifft die Navigation mobiler Logistik-Roboter mittels einer intelligenten topologischen Karte ohne globale metrische Karteninformationen. Knoten beschreiben einzigartige, über ein Identifikationssystem (ArUco-Marker) gestaltete Landmarken; die Knoten sind durch Kanten verbunden, die mit Annotationen (präferierter Pfad, Distanz, Fahrbahnbreite, Geschwindigkeitsbeschränkungen) gespeichert sind. Die Navigation zwischen Knoten erfolgt reaktiv durch Umgebungswahrnehmung.

Das Wissen über die Fahrwege und die entsprechenden Handlungsorte in einem Warenlager ist jedoch in Form von Lager- und Anwendungskenntnis vorhanden. Gerade die Mitarbeitenden in einem Warenlager besitzen sehr viel Anwendungswissen, das maschinenverfügbar als Grundlage der Aufgabenabarbeitung der als AMRs ausgebildeten Flurförderzeuge dienen könnte.

Vor diesem Hintergrund liegt der vorliegenden Erfindung die Aufgabe zu Grunde, einen verbesserten Transportroboter sowie ein Verfahren und System zur Inbetriebnahme, Anpassung und dem Betreiben eines solchen Transportroboters in einem Warenlager bereitzustellen.

Diese Aufgabe wird gemäß einem ersten Aspekt durch einen Transportroboter für den Betrieb in einem Warenlager gelöst. Bei dem Transportroboter kann es sich um ein Flurförderzeug, insbesondere einen Gabelstapler handeln. Der Transportroboter, welcher automatisiert, teilautomatisiert und/oder manuell betreibbar ist, ist dazu ausgebildet, Transportaufträge zum Transport von Waren in einem Warenlager mit einer Vielzahl von Transportrobotern durchzuführen. Dabei umfasst der Transportroboter eine Kommunikationsschnittstelle, beispielsweise eine Kommunikationsschnittstelle für die drahtlose Kommunikation über ein drahtloses Kommunikationsnetzwerk, wobei die Kommunikationsschnittstelle ausgebildet ist, ein Umgebungsmodell des Warenlagers und ein Fähigkeitsmodell der Vielzahl von Transportrobotern in dem Warenlager zu erhalten bzw. zu empfangen. In einer Ausführungsform ist die Kommunikationsschnittstelle des Transportroboters ausgebildet, das Umgebungsmodell des Warenlagers und das Fähigkeitsmodell der Vielzahl von Transportrobotern in dem Warenlager von einer zentralen Vorrichtung, beispielsweise einem Server zum Betreiben der Vielzahl von Transportrobotern, zu erhalten. Ferner kann der Transportroboter auch Transportaufträge von der zentralen Vorrichtung erhalten. In einer weiteren Ausführungsform ist die Kommunikationsschnittstelle des Transportroboters ausgebildet, das Umgebungsmodell des Warenlagers und das Fähigkeitsmodell der Vielzahl von Transportrobotern von einem anderen Transportroboter der Vielzahl von Transportrobotern zu erhalten.

Erfindungsgemäß definiert das Umgebungsmodell des Warenlagers eine Vielzahl von eindeutigen Schlüsselstellen (hierin auch als semantische Schlüsselstellen oder Knotenpunkte bezeichnet) des Warenlagers in Form einer topologischen Karte, in der jede Schlüsselstelle mindestens eine benachbarte, d.h. über eine Kante der topologischen Karte verbundene Schlüsselstelle besitzt. Das Fähigkeitsmodell der Vielzahl von Transportrobotern definiert bzw. umfasst für jede der Schlüsselstellen des Umgebungsmodells, d.h. der topologischen Karte, Bewegungsablaufinformationen, insbesondere zumindest eine Trajektorie, für eine automatisierte Bewegung von der entsprechenden Schlüsselstelle zu der wenigstens einen benachbarten Schlüsselstelle. Mit anderen Worten: das Fähigkeitsmodell mit den Bewegungsablaufinformationen, insbesondere Trajektorien, für jede Schlüsselstelle des Umgebungsmodells befähigt den Transportroboter benachbarte Schlüsselstellen des Umgebungsmodells miteinander zu verbinden. Für jede Schlüsselstelle der Vielzahl von Schlüsselstellen des Umgebungsmodells basieren erfindungsgemäß die Bewegungsinformationen, insbesondere die zumindest eine Trajektorie, des Fähigkeitsmodells (welche mit der entsprechenden Schlüsselstelle verknüpft sind) auf wenigstens einer durch Imitationslernen erlernten Bewegung eines zumindest zeitweise manuell, d.h. von einem Mitarbeitenden betriebenen Transportroboters der Vielzahl von Transportrobotern zwischen der Schlüsselstelle und der wenigstens einen benachbarten Schlüsselstelle. Der Transportroboter umfasst ferner eine Steuereinheit, welche zur Durchführung eines Transportauftrags von einer Startschlüsselstelle zu einer Zielschlüsselstelle der Vielzahl von Schlüsselstellen ausgebildet ist, die Bewegung des Transportroboters auf der Grundlage des Umgebungsmodells und des Fähigkeitsmodells automatisiert zu steuern. Erfindungsgemäß wird somit das für das automatische Betreiben des Transportroboters erforderliche Expertenwissen bzw. "Know-How" dem Transportroboter als Imitationswissen in Form des Fähigkeitsmodells vermittelt.

Gemäß einer Ausführungsform kann die Steuereinheit zur Durchführung des Transportauftrags von der Startschlüsselstelle zu der Zielschlüsselstelle der Vielzahl von Schlüsselstellen ausgebildet sein, die Bewegung des Transportroboters, insbesondere Flurförderzeugs, auf der Grundlage des Umgebungsmodells und ersten Bewegungsablaufinformationen, insbesondere einer ersten Trajektorie, und wenigstens zweiten Bewegungsablaufinformation, insbesondere wenigstens einer zweiten Trajektorie, des Fähigkeitsmodells automatisiert zu steuern, wobei die ersten Bewegungsablaufinformationen, insbesondere die erste Trajektorie, eine Bewegung von der Startschlüsselstelle zu einer der Startschlüsselstelle benachbarten Zwischenschlüsselstelle definieren und wobei die wenigstens zweiten Bewegungsablaufinformationen, insbesondere die wenigstens eine zweite Trajektorie, eine Bewegung von der Zwischenschlüsselstelle zu der Zielschlüsselstelle oder eine Bewegung von der Zwischenschlüsselstelle zu einer der Zwischenschlüsselstelle benachbarten weiteren Zwischenschlüsselstelle definieren.

In einer Ausführungsform ist die Steuereinheit ferner ausgebildet, nach der Bewegung des Transportroboters von der Startschlüsselstelle zu der Zwischenschlüsselstelle, welche auf der Grundlage der ersten Bewegungsablaufinformationen, insbesondere der ersten Trajektorie erfolgt, eine akkumulierte Abweichung einer Ist-Position oder Ist-Pose von einer Soll-Position oder Soll-Pose des Transportroboters relativ zu der Zwischenschlüsselstelle zu bestimmen und die Bewegung des Transportroboters von der Zwischenschlüsselstelle zu der Zielschlüsselstelle oder der weiteren Zwischenschlüsselstelle, welche auf der Grundlage der zweiten Bewegungsablaufinformationen, insbesondere der zweiten Trajektorie erfolgt, zu variieren, um der Abweichung entgegen zu wirken.

Gemäß einer Ausführungsform kann die Steuereinheit ferner ausgebildet sein, mithilfe einer Kostenfunktion die Bewegung des Transportroboters von der Startschlüsselstelle zu der Zielschlüsselstelle über die einen oder mehreren dazwischen liegenden Zwischenschlüsselstellen zu bestimmen.

Gemäß einer Ausführungsform kann jede Schlüsselstelle der Vielzahl von Schlüsselstellen eine künstliche Markierung (beispielsweise einen Marker) aufweisen und der Transportroboter kann ferner eine Sensoreinheit aufweisen, welche ausgebildet ist, die Markierung einer jeweiligen Schlüsselstelle zu erfassen und die jeweilige Schlüsselstelle auf der Grundlage der erfassten Markierung zu identifizieren.

In einer Ausführungsform ist die Steuereinheit des Transportroboters ausgebildet, auf der Grundlage der von der Sensoreinheit erfassten künstlichen Markierung einer jeweiligen Schlüsselstelle die Position, insbesondere die Pose, des Transportroboters relativ zu der jeweiligen Schlüsselstelle zu bestimmen.

Gemäß einer Ausführungsform kann es sich bei der Markierung der jeweiligen Schlüsselstelle um eine visuelle Markierung handeln und die Sensoreinheit des Transportroboters kann als eine Kamera, insbesondere eine Tiefenbildkamera zum Erfassen der visuellen Markierung der jeweiligen Schlüsselstelle ausgebildet sein.

In einer Ausführungsform umfasst der Transportroboter ferner eine Antriebseinheit, welche ausgebildet ist, auf der Grundlage von Bewegungssteuersignalen von der Steuereinheit die Bewegung des Transportroboters anzutreiben. Die Antriebseinheit kann beispielsweise eine Vielzahl von Antriebsrädern und einen elektrischen Antriebsmotor zum Antreiben der Vielzahl von Antriebsrädern umfassen.

Gemäß einem zweiten Aspekt wird die vorstehend genannte Aufgabe durch ein System zum Betreiben einer Vielzahl von Transportrobotern in einem Warenlager gelöst. Dabei umfasst das System eine Vielzahl von Transportrobotern gemäß dem ersten Aspekt der Erfindung sowie eine zentrale Vorrichtung zum Betreiben der Vielzahl von Transportrobotern in dem Warenlager, wobei die zentrale Vorrichtung ausgebildet ist, jedem Transportroboter der Vielzahl von Transportrobotern das Umgebungsmodell des Warenlagers und das Fähigkeitsmodell der Vielzahl von Transportrobotern bereitzustellen.

Gemäß einem dritten Aspekt wird die vorstehend genannte Aufgabe durch ein Verfahren zum Betreiben eines Transportroboters, insbesondere Flurförderzeug, gelöst, welcher automatisiert, teilautomatisiert und/oder manuell betreibbar ist, um Transportaufträge zum Transport von Waren in einem Warenlager mit einer Vielzahl von Transportrobotern durchzuführen. Dabei umfasst das Verfahren die folgenden Schritte:
Erhalten eines Umgebungsmodells des Warenlagers und eines Fähigkeitsmodells der Vielzahl von Transportrobotern in dem Warenlager (ggf. von einer zentralen Vorrichtung zum Betreiben der Vielzahl von Transportrobotern), wobei das Umgebungsmodell des Warenlagers eine Vielzahl von Schlüsselstellen des Warenlagers und für jede Schlüsselstelle wenigstens eine benachbarte Schlüsselstelle definiert und wobei das Fähigkeitsmodell für jede der Schlüsselstellen des Umgebungsmodells Bewegungsablaufinformationen, insbesondere zumindest eine Trajektorie, für eine automatisierte Bewegung zu der wenigstens einen benachbarten Schlüsselstelle definiert, wobei für jede Schlüsselstelle der Vielzahl von Schlüsselstellen des Umgebungsmodells die Bewegungsablaufinformationen, insbesondere die zumindest eine Trajektorie, des Fähigkeitsmodells auf wenigstens einer durch Imitationslernen erlernten Bewegung eines manuell betriebenen Transportroboters der Vielzahl von Transportrobotern zwischen der Schlüsselstelle und der wenigstens einen benachbarten Schlüsselstelle basiert; und Steuern der Bewegung des Flurförderzeugs auf der Grundlage des Umgebungsmodells und des Fähigkeitsmodells, um einen Transportauftrag von einer Startschlüsselstelle zu einer Zielschlüsselstelle der Vielzahl von Schlüsselstellen durchzuführen.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines Transportroboters in Form eines Flurförderzeugs zum Transport von Waren in einem Warenlager gemäß einer Ausführungsform;
Figur 2 eine schematische Darstellung eines erfindungsgemäßen Systems mit einer Vielzahl von Transportrobotern in Form von Flurförderzeugen und einer zentralen Vorrichtung zum Bereitstellen eines Umgebungsmodells und eines Fähigkeitsmodells zum Betreiben der Vielzahl von Transportrobotern;
Figur 3a eine Darstellung eines Transportroboters gemäß einer Ausführungsform in einem beispielhaften Warenlager mit einer Schlüsselstelle in Form einer Verzweigung;
Figur 3b eine Darstellung eines Umgebungsmodells des Warenlagers von Figur 3a;
Figur 3c eine Darstellung eines Transportroboters gemäß einer Ausführungsform in einem beispielhaften Warenlager mit zwei benachbarten Schlüsselstellen und der automatisierten Bewegung des Transportroboters auf der Grundlage des Fähigkeitsmodells;
Figur 3d eine Darstellung eines Umgebungsmodells des Warenlagers von Figur 3c;
Figur 3e eine Darstellung der Bewegung eines Transportroboters gemäß einer Ausführungsform auf der Grundlage des Fähigkeitsmodells von einer Startschlüsselstelle über eine Zwischenschlüsselstelle zu einer Zielschlüsselstelle;
Figur 3f eine automatisierte Korrektur der Bewegung von Figur 3e durch einen Transportroboter gemäß einer Ausführungsform; und
Figur 4 ein Flussdiagramm mit Schritten eines Verfahrens zum Betreiben eines Transportroboters zum Transport von Waren in einem Warenlager gemäß einer Ausführungsform.

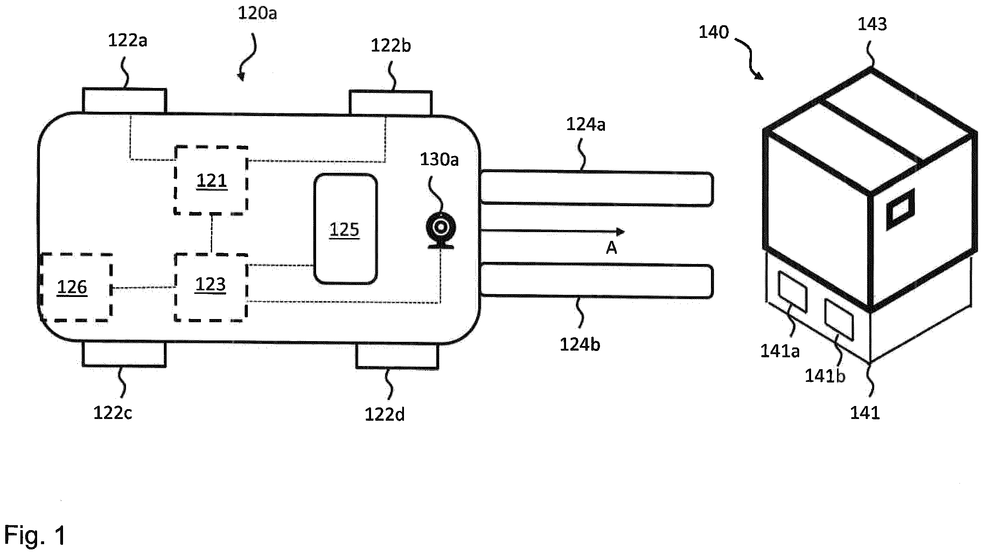

Figur 1 zeigt eine schematische Darstellung eines als Flurförderzeug ausgebildeten Transportroboter 120a in Form eines Gabelstaplers 120a gemäß einer Ausführungsform zum Transportieren von Waren 140 in einem industriellen Umfeld, insbesondere einem Warenlager. Bei dem als Flurförderzeug ausgebildeten Transportroboter 120a kann es sich insbesondere um einen zweitweise autonom, teil-autonom und/oder manuell betriebenen, d.h. von einem Bediener geführten Gabelstapler 120a handeln. Bei den Waren 140 kann es sich beispielsweise um Warenobjekte 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141 oder eine Gitterbox 141 handeln.

Wie in Figur 1 dargestellt, umfasst der als Flurförderzeug ausgebildete Transportroboter 120a ein Lastaufnahmemittel in Form eines Paares von Lastgabeln 124a,b, welche ausgebildet sind, in jeweilige Aussparungen, insbesondere Taschen 141a,b an einer Stirnseite des Ladungsträgers 141 eingebracht zu werden, um den Ladungsträger 141 sowie das darauf angeordnete Warenobjekt 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Der in Figur 1 dargestellte als Flurförderzeug 120a ausgebildete Transportroboter 120a umfasst ferner eine Antriebseinheit 121, beispielsweise wenigstens einen Motor 121, insbesondere einen Elektromotor 121, wobei die Antriebseinheit 121 ausgebildet ist, das Flurförderzeug 120a und das Paar von Lastgabeln 124a,b relativ zu der Ware 140 zu bewegen, um beispielsweise die Orientierung und/oder den Abstand zwischen dem Flurförderzeug 120a und der Ware 140 zu ändern und/oder das Paar von Lastgabeln 124a,b anzuheben oder abzusenken. Zu diesem Zweck kann, wie in Figur 1 angedeutet, die Antriebseinheit 121 geeignet mit Rädern 122a-d und/oder dem Paar von Lastgabeln 124a,b des Flurförderzeugs 120a verbunden sein.

Der als Flurförderzeug 120a ausgebildete Transportroboter 120a kann ferner eine Sensoreinheit 130a, insbesondere eine Bildererfassungseinheit 130a umfassen, welche ausgebildet ist, bei der Bewegung des Transportroboters 120a eine Vielzahl von Bildern der Umgebung des Flurförderzeugs 120a zu erfassen. Vorzugsweise umfasst die Bilderfassungseinheit 130a eine Kamera 130a, insbesondere eine Tiefenbildkamera 130a. Wie in Figur 1 angedeutet, ist die Bilderfassungseinheit 130a vorzugsweise derart an dem als Flurförderzeug 120a ausgebildeten Transportroboter 120a montiert, dass das Blickfeld der Bilderfassungseinrichtung 130a im Wesentlichen entlang einer Vorwärtsbewegungsrichtung A des Transportroboters 120a liegt. Vorzugsweise kann die Bilderfassungseinrichtung 130a in der Symmetrieebene zwischen den zwei Lastgabeln 124a,b montiert sein. Neben der Bilderfassungseinrichtung 130a mit dem Blickfeld entlang der Vorwärtsbewegungsrichtung A des Transportroboters 120a kann der als Flurförderzeug 120a ausgebildete Transportroboter 120a noch weitere Bilderfassungseinrichtungen oder Sensoreinheiten umfassen, beispielsweise eine Bilderfassungseinrichtung mit einem Blickfeld entlang einer Rückwärtsbewegungsrichtung des Transportroboters 120a und/oder eine Bilderfassungseinrichtung mit einem Blickfeld senkrecht zu der Vorwärtsbewegungsrichtung A des Transportroboters 120a.

Erfindungsgemäß umfasst der als Flurförderzeug 120a ausgebildete Transportroboter 120a ferner eine Steuereinheit 123, welche beispielsweise einen oder mehrere Prozessoren oder Mikro-Controller mit geeigneter Software umfassen kann und ausgebildet ist, den als Flurförderzeug 120a ausgebildeten Transportroboter 120a zumindest teilweise automatisiert zu steuern, wie dies nachstehend im Detail beschrieben wird.

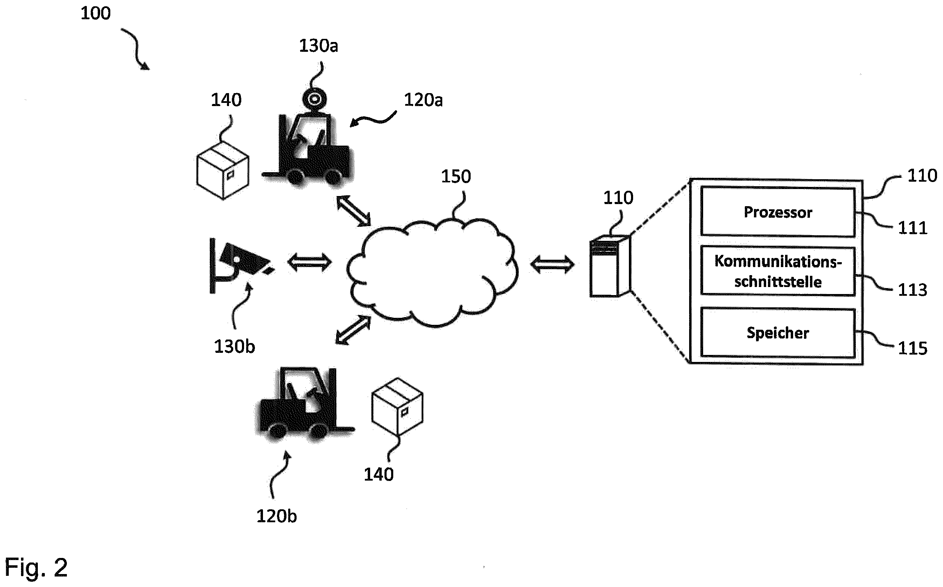

Figur 2 zeigt eine schematische Darstellung eines erfindungsgemäßen Systems 100 zum Betreiben des als Flurförderzeug 120a ausgebildeten Transportroboters 120a sowie wenigstens eines weiteren als Flurförderzeug 120b ausgebildeten Transportroboters 120b, welche jeweils zeitweise automatisiert, teilautomatisiert und/oder manuell betreibbar sind, um Transportaufträge zum Transport von Waren 140 in einem Warenlager durchzuführen.

Das System 100 umfasst neben der Vielzahl von Transportrobotern 120a,b eine zentrale Verwaltungsvorrichtung 110, beispielsweise einen Server 110, welche ausgebildet ist, mit jedem Transportroboter 120a,b der Vielzahl von Transportrobotern 120a,b zu kommunizieren und jedem der Vielzahl von Transportrobotern 120a,b beispielsweise Transportaufträge zum Transport der Waren 140 in dem Warenlager zuzuteilen. Hierzu umfasst beispielsweise der als Flurförderzeug ausgebildete Transportroboter 120a eine Kommunikationsschnittstelle 126, welche ausgebildet ist, mit einer entsprechenden Kommunikationsschnittstelle 113 der zentralen Verwaltungsvorrichtung 110 und mit einer externen Sensoreinheit 130b, wie beispielsweise einer Sensoreinheit 130b des Warenlagers, zu kommunizieren, beispielsweise über ein drahtloses Kommunikationsnetzwerk 150, z.B. ein Wi-Fi-Netzwerk oder ein Mobilfunknetzwerk. Bei der in Figur 2 dargestellten zentralen Verwaltungsvorrichtung 110 kann es sich beispielsweise um einen Industrie-PC 110 oder einen Cloud-Server, insbesondere einen Edge-Cloud-Server 110 handeln.

Wie in der Figur 2 dargestellt, kann die zentrale Verwaltungsvorrichtung 110 neben der bereits erwähnten Kommunikationsschnittstelle 113, einen oder mehrere Prozessoren 111 und einen, insbesondere nichtflüchtigen, Speicher 115 aufweisen. Der Speicher 115 kann ausgebildet sein, Daten und ausführbaren Programmcode zu speichern, der, wenn von dem Prozessor 111 der zentralen Verwaltungsvorrichtung 110 ausgeführt, den Prozessor 111 veranlasst, die im Folgenden beschriebenen Funktionen, Operationen und Verfahren durchzuführen.

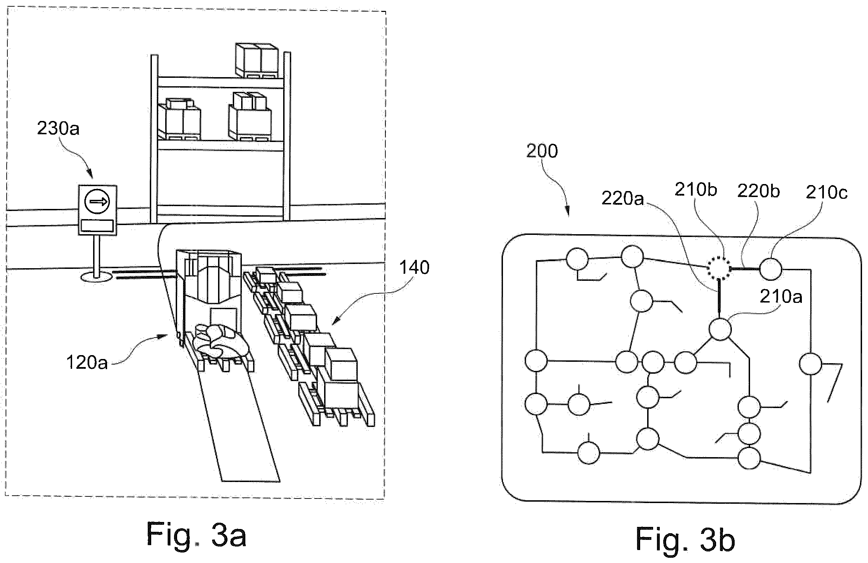

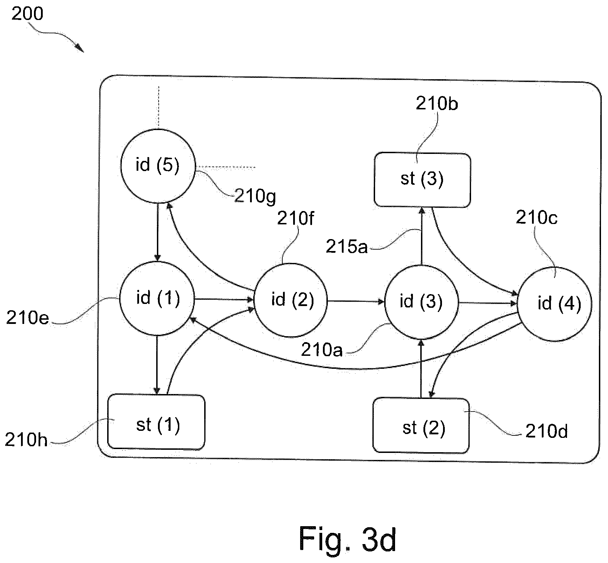

Wie dies nachstehend unter weiterer Bezugnahme auf die Figuren 3a-f im Detail beschrieben wird, ist die Kommunikationsschnittstelle 126 des als Flurförderzeug ausgebildeten Transportroboters 120a ausgebildet, ein Umgebungsmodell des Warenlagers (beispielhafte Umgebungsmodelle 200 eines Warenlagers sind in den Figuren 3b und 3d dargestellt) und ein Fähigkeitsmodell der Vielzahl von Transportrobotern 120a,b in dem Warenlager zu erhalten bzw. zu empfangen. In einer Ausführungsform ist die Kommunikationsschnittstelle 126 des Transportroboters 120a ausgebildet, das Umgebungsmodell 200 des Warenlagers und das Fähigkeitsmodell der Vielzahl von Transportrobotern 120a,b in dem Warenlager von der zentralen Verwaltungsvorrichtung 110 zu erhalten. In einer weiteren Ausführungsform ist die Kommunikationsschnittelle 126 des Transportroboters 120a ausgebildet, das Umgebungsmodell 200 des Warenlagers und das Fähigkeitsmodell der Vielzahl von Transportrobotern 120a,b, von einem anderen Transportroboter, z.B. dem Transportroboter 120b, der Vielzahl von Transportrobotern zu erhalten. Wie dies nachstehend im Detail beschrieben wird, basieren das Umgebungsmodell 200 des Warenlagers und insbesondere das Fähigkeitsmodell der Vielzahl von Transportrobotern 120a,b auf in dem Warenlager gesammelten Imitationswissen, welches insbesondere zum Einrichten eines neuen Transportroboters in dem Warenlager vorteilhaft verwendet werden kann.

In einer Ausführungsform ist die zentrale Verwaltungsvorrichtung 110 ausgebildet, das Umgebungsmodell 200 des Warenlagers und das Fähigkeitsmodel der Vielzahl von als Flurförderzeugen ausgebildeten Transportroboter 120a,b zu generieren und den als Flurförderzeugen ausgebildeten Transportrobotern 120a,b zur Verfügung zu stellen. In einer weiteren Ausführungsform kann die Vielzahl von Transportrobotern das Umgebungsmodel des Warenlagers und das Fähigkeitsmodel verteilt zu generieren.

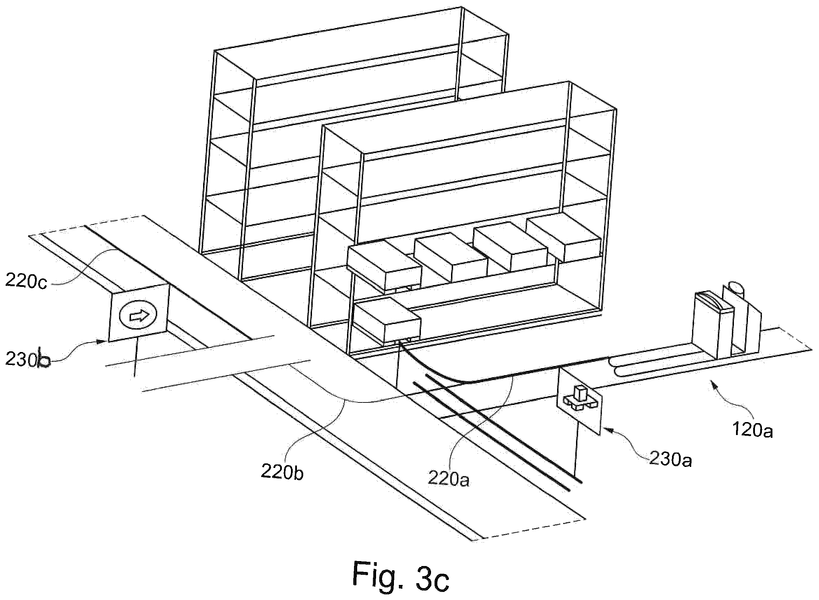

Wie dies nachstehend detaillierter beschrieben wird, definiert das Umgebungsmodell 200 des Warenlagers eine Vielzahl von eindeutigen Schlüsselstellen 210a-c (hierin auch als semantische Schlüsselstellen 210a-c oder Knotenpunkte 210a-c bezeichnet) des Warenlagers in Form einer topologischen Karte. Die Figuren 3a und 3c zeigen jeweils einen Abschnitt eines Warenlagers mit Schlüsselstellen und die Figure 3b und 3d zeigen jeweils das entsprechende Umgebungsmodell 200. Wie sich dies insbesondere, der Figur 3d entnehmen lässt, besitzt jede Schlüsselstelle 210a-h mindestens eine benachbarte, d.h. über eine Kante der topologischen Karte verbundene Schlüsselstelle. Beispielsweise ist in dem in Figur 3d dargestellten beispielhaften Umgebungsmodell 200 die Schlüsselstelle 210a über eine Kante 215a mit der Schlüsselstelle 210b verbunden.

Wie dies nachstehend detaillierter beschrieben wird, definiert bzw. umfasst das Fähigkeitsmodell der Vielzahl von Transportrobotern 120a,b für jede der Schlüsselstellen 210a-h des Umgebungsmodells 200, d.h. der topologischen Karte 200, Bewegungsablaufinformationen, insbesondere zumindest eine Trajektorie, für eine automatisierte Bewegung von der entsprechenden Schlüsselstelle zu der wenigstens einen benachbarten Schlüsselstelle oder zum Handling von Paletten (automatische Ablagerung oder Aufnahme). Mit anderen Worten: das Fähigkeitsmodell mit den Bewegungsablaufinformationen, insbesondere Trajektorien, für jede Schlüsselstelle des Umgebungsmodells 200 befähigt den Transportroboter 120a benachbarte Schlüsselstellen des Umgebungsmodells 200 miteinander zu verbinden.

Bei dem in Figur 3c dargestellten Beispiel bewegt sich der erfindungsgemäße Transportroboter 120a automatisiert auf der Grundlage einer ersten Trajektorie 220a zu einer mit einer ersten optischen Markierung 230a versehenen ersten Schlüsselstelle. Anschließend bewegt sich der erfindungsgemäße Transportroboter 120a automatisiert auf der Grundlage einer zweiten Trajektorie 220b mit einer Rechtskurve von der ersten Schlüsselstelle zu einer mit einer zweiten optischen Markierung 230b versehenen zweiten Schlüsselstelle, um die Weiterfahrt auf der Grundlage einer dritten Trajektorie 220b automatisiert fortzusetzen. Wie der Fachmann erkennt, ist bei dem in Figur 3c dargestellten Beispiel beispielsweise die zweite Trajektorie 220b, welche Teil des Fähigkeitsmodells ist, mit der ersten durch das Umgebungsmodell definierten Schlüsselstelle verknüpft, welche mit der ersten Markierung 230a versehen ist. Selbstverständlich kann die erste durch das Umgebungsmodell definierte Schlüsselstelle noch mit weiteren Trajektorien oder Bewegungsablaufinformationen des Fähigkeitsmodells verknüpft ein, beispielsweise einer Trajektorie, welche in dem Beispiel von Figur 3c eine Linkskurve beschreibt.

Für jede Schlüsselstelle der Vielzahl von Schlüsselstellen 210a-h des Umgebungsmodells 200 basieren erfindungsgemäß die Bewegungsinformationen, insbesondere die zumindest eine Trajektorie, des Fähigkeitsmodells (welche mit der entsprechenden Schlüsselstelle verknüpft sind) auf wenigstens einer durch Imitationslernen erlernten Bewegung eines zumindest zeitweise manuell, d.h. von einem Mitarbeitenden betriebenen Transportroboters der Vielzahl von Transportrobotern zwischen der Schlüsselstelle und der wenigstens einen benachbarten Schlüsselstelle. Mit anderen Worten: während des manuellen Betriebs der Transportroboter in einem Warenlager können Bewegungsablaufinformationen, insbesondere Trajektorien, aufgezeichnet und gesammelt werden, um das Fähigkeitsmodell zu generieren bzw. zu erweitern/aktualisieren.

Wie der Fachmann erkennt, definiert das Umgebungsmodel 200 und das Fähigkeitsmodell somit eine annotierte topologische Karte des Warenlagers mit einer Vielzahl von miteinander verbundenen Schlüsselstellen 210a-h, wobei durch das Fähigkeitsmodell mit jeder Schlüsselstelle 210a-h Bewegungsablaufinformationen, beispielweise wenigstens eine Trajektorie 220a-c, des Fähigkeitsmodells für die Bewegung zu wenigstens einer benachbarten Schlüsselstelle verknüpft sind. Diese Bewegungsablaufinformationen 220a-c des Fähigkeitsmodells können, wie bereits beschrieben, eine Trajektorie zur Beschreibung notwendiger Fahrbefehle zur Erreichung der Nachbarschlüsselstellen definieren bzw. umfassen, aber auch andere Arten von Bewegungsablaufinformationen, welche komplexere Bewegungen abbilden, beispielsweise zum Abstellen oder Aufnehmen von Paletten, dem Laden des Transportroboters und dergleichen.

Wie bereits vorstehend beschrieben, umfasst der Transportroboter 120a eine Steuereinheit 123, welche zur Durchführung eines Transportauftrags von einer Startschlüsselstelle zu einer Zielschlüsselstelle der Vielzahl von Schlüsselstellen 210a-h ausgebildet ist, die Bewegung des Transportroboters 120a auf der Grundlage des Umgebungsmodels 200 und des Fähigkeitsmodels automatisiert zu steuern. Erfindungsgemäß wird somit das für das automatische Betreiben des Transportroboters 120a erforderliche Wissen bzw. "Know-How" dem Transportroboter 120a in Form des Umgebungsmodells 200 und als Imitationswissen in Form des Fähigkeitsmodells vermittelt. Der erfindungsgemäße als Flurförderzeug 120a ausgebildete Transportroboter 120a und das erfindungsgemäße System 100 stellen somit eine Abbildung automatisierter Warentransporte durch Imitation bereit. Die dafür notwendigen Orts- und Handlungsinformationen werden durch die Beobachtung zuvor ausgeführter Bewegungen eines manuell (d.h. von einem Menschen mit Expertenwissen, z.B. Lagermitarbeitende) gesteuerten als Flurförderzeug ausgebildeten Transportroboters120b (der baugleich oder ähnlich zu dem Transportroboter 120a sein kann) nebenläufig erzeugt, sodass diese zur Generierung oder Aktualisierung des Fähigkeitsmodells verwendet werden können. Nebenläufigkeit beschreibt in diesem Zusammenhang eine Explorationsphase der Vielzahl von als Flurförderzeugen ausgebildeten Transportroboter 120a,b, die durch Beobachtung des Anwendungsfeldes während der routinemäßigen Arbeit alle ausgeführten Bewegungen und deren Ortsbezug im Warenlager automatisch erlernt.

Erfindungsgemäß kann somit in der Explorationsphase Imitationswissen in Form von Umgebungswissen durch Beobachtung manueller Transporte mit dem als Flurförderzeug ausgebildeten Transportroboter 120a,b automatisch erlernt werden. Während der Demonstration wird dazu, wie bereits vorstehend beschrieben, das Umgebungsmodell 200 des Warenlagers in Form einer topologischen Karte 200 erzeugt, das auf einer Vielzahl von semantischen Schlüsselstellen 210a-h des Warenlagers basiert. Gemäß einer Ausführungsform können die semantischen Schlüsselstellen 210a-h dabei als Orte für den Transport der Waren 140 grundlegender Entscheidungen in dem Warenlager betrachtet werden, um das gewünschte Ziel von automatisierten Transportaufträgen erreichen zu können. Neben den im Umgebungsmodell 200 enthaltenen Informationen kann, wie bereits vorstehend beschrieben, zusätzlich das Fähigkeitsmodell erlernt werden, das zur Verknüpfung zwischen den zuvor beobachteten semantischen Schlüsselstellen 210a-h dient.

Das Imitationswissen kann in einer anschließenden Exploitationsphase mit Hilfe einer Albasierten Handlungsplanung zu konkreten Transportaufträgen verknüpft werden, sodass die zuvor demonstrierten manuellen Transporte automatisch ausgeführt werden können. Mögliche Störungen in der Ausführung der erlernten Bewegungen durch systemimmanente Fehler oder dynamische Hindernisse können durch beispielsweise einen adaptierten State-Lattice-Pfadplaner kompensiert werden. Die für die Ausführung automatischer Bewegungen im Raum benötigte Lokalisation kann auf einem Proximitybasierten Lokalisationsansatz basieren, der für die metrisch kontinuierlichen Lokalisationsbedarfe die Verknüpfung der Knoten 210a-h des Umgebungsmodells 200 (d.h. der Schlüsselstellen 210a-h) über das Fähigkeitsmodell ausnutzt und damit auf einen singulären Referenzpunkt, wie einen Koordinatenursprung in metrischen Karten, verzichten kann.

Gemäß einer Ausführungsform kann jede Schlüsselstelle der Vielzahl von Schlüsselstellen 210a-h eine künstliche Markierung 230a,b aufweisen, wie dies bereits vorstehend im Zusammenhang mit den Figuren 3a und 3c beschrieben worden ist. Dabei ist eine jeweilige Markierung 230a,b so ausgebildet, dass diese mit der Sensoreinheit 130a, insbesondere Kamera 130a des als Flurförderzeug ausgebildeten Transportroboters 120a erfasst werden kann, um die jeweilige Schlüsselstelle auf der Grundlage der erfassten Markierung 230a,b zu identifizieren. Gemäß einer Ausführungsform kann die Sensoreinheit 130a neben einer Kamera, insbesondere einer Tiefenbildkamera eine Infrarotlichtquelle zum Ausleuchten des Blickfeldes der Tiefenbildkamera umfassen.

In einer Ausführungsform ist die Steuereinheit 123 des als Flurförderzeug ausgebildeten Transportroboters 120a ausgebildet, auf der Grundlage der von der Sensoreinheit 130a erfassten Markierung 230a,b einer jeweiligen Schlüsselstelle die Position oder Pose 240a-c des als Flurförderzeug ausgebildeten Transportroboters 120a relativ zu der jeweiligen Schlüsselstelle 210a-c zu bestimmen.

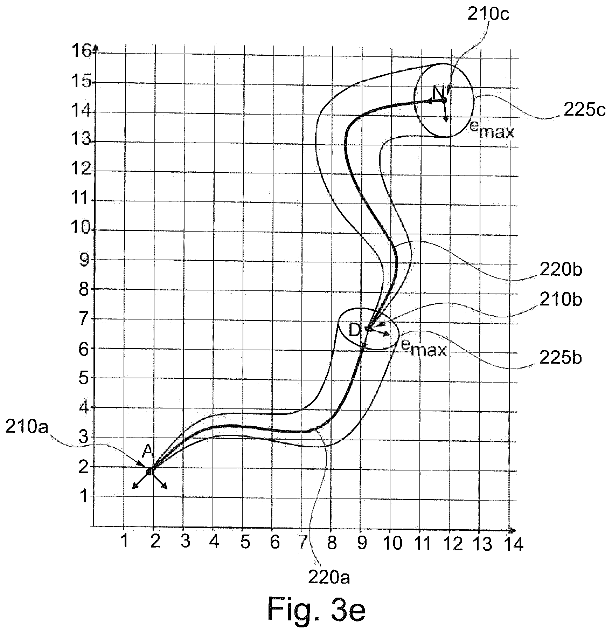

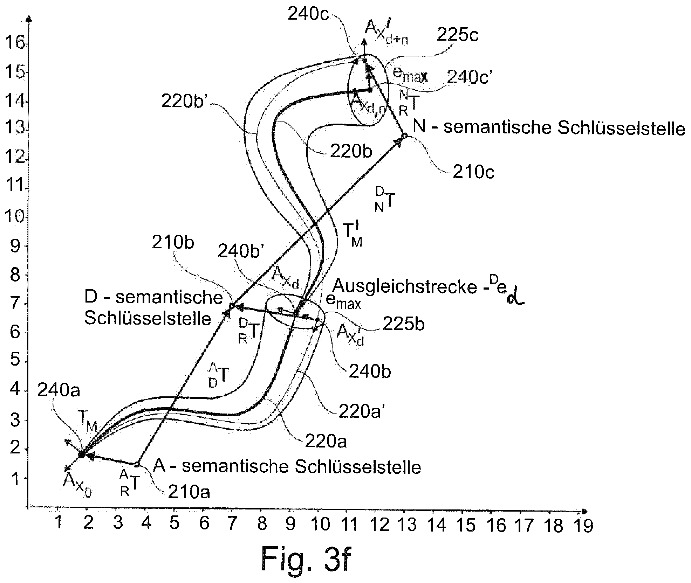

Figur 3e zeigt eine Darstellung der Bewegung des Transportroboters 120a gemäß einer Ausführungsform auf der Grundlage des Fähigkeitsmodells von einer Position bei einer Startschlüsselstelle 210a über eine Position bei einer Zwischenschlüsselstelle 210b zu einer Position bei einer Zielschlüsselstelle 210c des Umgebungsmodells 200. Figur 3f zeigt eine automatisierte Korrektur der Bewegung von Figur 3e durch einen Transportroboter 120a gemäß einer Ausführungsform, wie dies nachstehend detaillierter beschrieben wird.

Bei dem in Figur 3e dargestellten Beispiel ist die Steuereinheit 123 des als Flurförderzeug ausgebildeten Transportroboters 120a zur Durchführung des Transportauftrags von der Startschlüsselstelle 210a zu der Zielschlüsselstelle 210c der Vielzahl von Schlüsselstellen 210a-c ausgebildet, die Bewegung des als Flurförderzeug ausgebildeten Transportroboters 120a auf der Grundlage des Umgebungsmodels 200 und erster Bewegungsablaufinformationen 220a, insbesondere einer ersten Trajektorie 220a, und wenigstens zweiter Bewegungsablaufinformationen 220b, insbesondere wenigstens einer zweiten Trajektorie 220b, des Fähigkeitsmodells automatisiert zu steuern. Dabei definieren die ersten Bewegungsablaufinformationen 220a, insbesondere die erste Trajektorie 220a, eine Bewegung von der Startschlüsselstelle 210a zu einer der Startschlüsselstelle 210a benachbarten Zwischenschlüsselstelle 210b und die wenigstens zweiten Bewegungsablaufinformationen 220b, insbesondere die wenigstens eine zweite Trajektorie 220b, definieren eine Bewegung von der Zwischenschlüsselstelle 210b zu der Zielschlüsselstelle 210c. Gemäß einer Ausführungsform kann die Steuereinheit 123 des Transportroboters 120 ferner ausgebildet sein, mithilfe einer Kostenfunktion die Bewegung des als Flurförderzeug ausgebildeten Transportroboters 120a von der Startschlüsselstelle 210a zu der Zielschlüsselstelle 210c über die einen oder mehreren dazwischen liegenden Zwischenschlüsselstellen 210b zu bestimmen. Beispielsweise kann die Steuereinheit 123 auf der Grundlage der Kostenfunktion einen Weg von der Startschlüsselstelle 210a zu der Zielschlüsselstelle 210 über eine oder mehreren dazwischen liegende Zwischenschlüsselstellen 210b bestimmen, welche eine Fahrzeit oder einen Fahrweg des Transportroboters 120a minimiert.

Wie sich dies insbesondere der Figur 3f entnehmen lässt, ist in einer Ausführungsform die Steuereinheit 123 des als Flurförderzeug ausgebildeten Transportroboters 120a ferner ausgebildet, nach der Bewegung des als Flurförderzeug ausgebildeten Transportroboters 120a von der Startschlüsselstelle 210a zu der Zwischenschlüsselstelle 210b, welche auf der Grundlage der ersten Bewegungsablaufinformationen 220a, insbesondere der ersten Trajektorie 220a, des Fähigkeitsmodells erfolgt, eine akkumulierte Abweichung einer Ist-Position oder Ist-Pose 240b von einer Soll-Position oder Soll-Pose 240b' des als Flurförderzeug ausgebildeten Transportroboters 120a relativ zu der Zwischenschlüsselstelle 210b zu bestimmen. Wie dies in Figur 3f angedeutet ist und nachstehend detaillierter beschrieben wird, ist die Steuereinheit 123 des Transportroboters 120a gemäß einer Ausführungsform ausgebildet, die Bewegung Transportroboters 120a von der Zwischenschlüsselstelle 210b zu der Zielschlüsselstelle 210c, welche auf der Grundlage der Soll-Trajektorie 220b erfolgt, zu variieren, um der bei der Zwischenschlüsselstelle 210b akkumulierten Abweichung entgegenzuwirken, welche als integrale Fehlerausbreitung betrachtet werden kann.

Gemäß einer Ausführungsform ist die Steuereinheit 123 des Transportroboters 120a ausgebildet, der in Figur 3f dargestellten integralen Fehlerausbreitung bei der Bewegung zu der Zwischenschlüsselstelle 210b durch die Korrektur der Lokalisation (Proximitybasiert) an der Zwischenschlüsselstelle 210b entgegenzuwirken. Dazu kann neben der Bewegungsablaufinformationen 220a, insbesondere Trajektorie 220a für die Bewegung zur Zwischenschlüsselstelle 210b auch die Position der Zwischenschlüsselstelle 210b relativ zu der Startschlüsselstelle 210a in dem Umgebungsmodell 200 (beispielsweise in Form von Metadaten) hinterlegt sein und für die Fehlerkorrektur verwendet werden.

Für die Realisierung einer missionsindividuellen metrischen Lokalisation wird gemäß einer Ausführungsform als Referenzpunkt die Position der Startschlüsselstelle 210a verwendet. Sobald im weiteren Verlauf der automatisierten Bewegung des Transportroboters 120a erwartete Knoten des Umgebungsmodells 200 auftauchen, beispielsweise die Zwischenschlüsselstelle 210b, können diese aufgrund ihrer bekannten, verketteten, geometrischen Beziehung zur Startschlüsselstelle 210a als Korrekturgröße genutzt werden. Dabei können gemäß einer Ausführungsform alle relevanten geometrischen Beziehungen der Schlüsselstellen 220a-c der topologischen Karte 200, d.h. dem Umgebungsmodell 200 entnommen werden.

Wie bereits vorstehend beschrieben, startet bei dem in Figur 3f dargestellten Beispiel die Bewegung des Transportroboters 120a in der Nähe der Startschlüsselstelle 210a (in Figur 3f auch als Knotenpunkt A bezeichnet), welche als Referenzpunkt genutzt wird, und verläuft über die Zwischenschlüsselstelle 210b (in Figur 3f auch als Knotenpunkt D bezeichnet) zu der Zielschlüsselstelle 210c (in Figur 3c auch als Knotenpunkt N bezeichnet). Somit startet der Transportroboter 120a seine geplante erste Trajektorie 220a (d.h. die erste Solltrajektorie 220a), welche Teil des Fähigkeitsmodells ist, beim Referenzpunkt A. Unter der Annahme, dass die Verfolgung der ersten Trajektorie 220a, welche die Verbindung zwischen der Startschlüsselstelle 220a (Punkt A) und der Zwischenschlüsselstelle 220b (Punkt D) abbildet, zu Beginn keinen Versatz hat, startet die erste Ist-Trajektorie 220a' mit derselben Pose, wie die geplante erste Trajektorie 220a. Da die Lokalisation der semantischen Schlüsselstelle örtlich begrenzt sein kann, verwendet gemäß einer Ausführungsform die Lokalisation in der weiteren Verfolgung der Bewegung des Transportroboters 120a Odometriesignale des Transportroboters 120a. Die Odometriesignale können während der Bewegung einen zufälligen Fehler erzeugen, so dass sich die in Figur 3f dargestellte Abweichung zwischen der Soll-Trajektorie 220a und der Ist-Trajektorie 220a' ergibt.

Gemäß einer Ausführungsform beruht eine erfolgreiche Lokalisation darauf, dass der kumulierte Fehler (hierin als eₖ bezeichnet) am Ende der Bewegung entlang einer Trajektorie des Fähigkeitsmodells eine Erkennung des nächstfolgenden Knotens sensorisch zulässt. Die in Figur 3f gekennzeichneten Ellipsen 225 und 225c definieren diesen Zielbereich, in dem die sensorische Lokalisation möglich ist, für die Zwischenschlüsselstelle 210b bzw. die Zielschlüsselstelle 210c. Beim Erreichen des Zielbereichs 250b am Ende der Bewegung von der Startschlüsselstelle 210a zu der Zwischenschlüsselstelle 210b wird die Zwischenschlüsselstelle 210b als neuer Referenzpunkt verwendet. Durch das Erkennen der Zwischenschlüsselstelle 210b durch den Transportroboter 120a kann der tatsächliche Fehler berechnet werden. Der Fehler zwischen der geplanten Soll-Trajektorie 220a und der Ist-Trajektorie 220b ergibt sich durch die Differenz der erwarteten Pose und der gemessenen Pose nach folgender Gleichung: ${}^{D} {e}_{d} = x D {}_{d} - x D {}_{d}^{′} \text{mit} x D {}_{d} = {\left({}_{D}^{A} T\right)}^{- 1} ⋅ x A {}_{d}$

Mit dem so ermittelten Fehler e_{d} an der Zwischenschlüsselstelle 210b zum Zeitpunkt d kann gemäß einer Ausführungsform dieser Fehler ausgeglichen werden, um die Bewegung des Transportroboters 120a wieder an eine geplante Soll-Bewegung anzupassen. Aufgrund der nicht holonomen Eigenschaften vieler Transportroboter wird gemäß einer Ausführungsform der Ausgleich des ermittelten Fehlers durch eine Ausgleichstrajektorie mit einer individuellen Streckenlänge vorgenommen. Dieser dafür benötigte Pfad ist in Figur 3f als gestrichelter Teil der Ist-Trajektorie 220b' dargestellt. Somit kann der bis dahin kumulierte Fehler nach dem Bekanntwerden durch de Steuereinheit 123 des Transportroboters 120a vollständig ausgeglichen werden.

Bei der weiteren Bewegung des Transportroboters 120a von der Zwischenschlüsselstelle 210b zu der Zielschlüsselstelle 210c kann erneut ein Fehler entstehen (insbesondere durch fehlerbehaftete Odometriesignale), sobald der Transportroboter 120a die sensorische Knotenerfassung der Zwischenschlüsselstelle 210b verlässt. Bis zur Erreichung der sensorischen Wahrnehmung der Zielschlüsselstelle 210c kann sich der Lokalisationsfehler, wie bei der Bewegung von der Startschlüsselstelle 210a zu der Zwischenschlüsselstelle 210b, nun auch bei der aktuellen Bewegung zu der Zielschlüsselstelle 210c vergrößern. Sobald der Transportroboter 120a in den sensorischen Erfassungsbereich 225c der Zielschlüsselstelle 210c einfährt, kann wiederum der Fehler e berechnet werden. Für die Gesamtbewegung von der Startschlüsselstelle 210a zu der Zielschlüsselstelle 210c bedeutet dies, dass die zuvor berechneten Fehlerkorrekturen die Erreichung der nachfolgenden Schlüsselstelle ermöglichen, sofern der Transportroboter 120a die maximal zulässige Fehlerellipse 225 (in Figur 3f als emax bezeichnet) nicht verlässt.

Die sich allgemein ableitende Berechnungsvorschrift für die Ermittlung des Fehlers eₖ an der Schlüsselstelle c zum Zeitpunkt k ergibt sich durch die Verkettung der Knoten in der topologischen Karte 200 nach folgender Gleichung: ${}^{c} {e}_{k} = x c {}_{k} - x c {}_{k}^{′} \text{mit} x c {}_{k} = \left({{\prod }_{i = S}^{c} \left({}_{i + 1}^{i} T\right)}^{- 1}\right) ⋅ x S {}_{k}$

Der Index S in der zuvor dargestellten Gleichung entspricht in diesem Kontext dem Startpunkt der Bewegung des Transportroboters bei der Startschlüsselstelle 210a, während c die nächste zu erwartende Schlüsselstelle darstellt. Die Notation Sxₖ entspricht der aktuellen Odometrie-gestützten, fehlerkorrigierten Pose des Transportroboters 120a zum diskreten Zeitpunkt k im Start-Koordinatensystem.

Wie der Fachmann erkennt, spielt erfindungsgemäß für eine erfolgreiche Lokalisation die Anzahl der Missionsknoten, d.h. Schlüsselstelle keine Rolle. Für die Korrektur der Lokalisation ist lediglich die relative Pose zwischen den benachbarten Knoten notwendig. Zudem müssen die Knoten sensorisch durch den Transportroboter 120a detektiert werden können, um deren relative Pose berechnen zu können.

Die erfindungsgemäße Abbildung der Umgebung eines Warenlagers als topologische Karte bzw. Umgebungsmodell 200 besitzt zunächst den Vorteil, dass die Ortsinformationen als diskretes Planungsnetzwerk abgelegt werden können. Dieses diskrete Planungsnetzwerk stellt über seine Kanten alle Verbindungsmöglichkeiten dar, die der Transportroboter 120a ausführen kann. Ferner kann die topologische Karte das Umgebungsmodell 200 und die (erlernten) Fähigkeiten zur Verknüpfung benachbarter Knoten vereinen. Die topologischen Karten erweitern daher grundlegend den geometrisch-semantischen Ansatz bisheriger Kartenmodelle durch die Integration eines Fähigkeitsmodells. Das Fähigkeitsmodell wird als metrische Verbindung zwischen den Knoten des Umgebungsmodells 200 genutzt. Durch die Verbindung mehrerer Knoten entsteht somit eine kinematische Kette, die den sich aufbauenden unbekannten Lokalisationsfehler an den Knotenpunkten (semantischen Schlüsselstellen) unterbricht, da die Positionen der sensorisch erfassten Knoten umgebungsinvariant sind. Aus dieser Beobachtung resultieren zunächst zwei wesentliche Ableitungen.

Integrale Lokalisationsfehler, die durch äußere Einflüsse wie Schlupf, fehlerbehafteter Sensorik, digitale Verluste etc. entstehen, können in ihren Auswirkungen an den sensorisch erfassten Knoten begrenzt werden. Aus diesem Grund minimieren die hier beschriebenen annotierten, topologischen Karten das Risiko einer invaliden Gemeinschaftskarte, so diese von einer Flotte von Transportrobotern automatisch gelernt und erweitert wird. Die Karte selbst kann dadurch ohne weiteres ausgetauscht werden.

Die abbildbare geometrische Länge der Trajektorien des Fähigkeitsmodells zur Verbindung der Knoten ist nur von der verwendeten Sensorik des Transportroboters abhängig und kann überdies durch sensorische Nachverarbeitungsschritte (z.B. visuelle Odometrie) erweitert werden.

In einer weiteren Ausgestaltungsmöglichkeit kann vorgesehen werden, den entstehenden und mit zunehmender Entfernung zum passierten Knotenpunkt anwachsenden inkrementellen Fehler dadurch zu begrenzen, dass eine relative stützende Lokalisierung genutzt wird, z.B. durch Zuhilfenahme von Verfahren der visuellen Odometrie aber auch von Fahrbahnmarkierungen, Bordsteinen, und dergleichen. Dadurch kann die Entfernung zwischen den Stützstellen in einem Warenlager vergrößert werden.

Ein weiterer Vorteil erwächst aus der Abbildung (Mapping) logischer Informationen der visuell wahrgenommenen Knoten, wenn diese einen direkten Abbildungsbezug zum Warenmanagement besitzen. In diesem Fall kann das Warenmanagement direkt mit den Knoteninformationen arbeiten, sodass die aufwändige Überführung von logischen Informationen des Warenmanagements zu geometrischen Informationen der Transportroboter 120a,b entfallen kann.

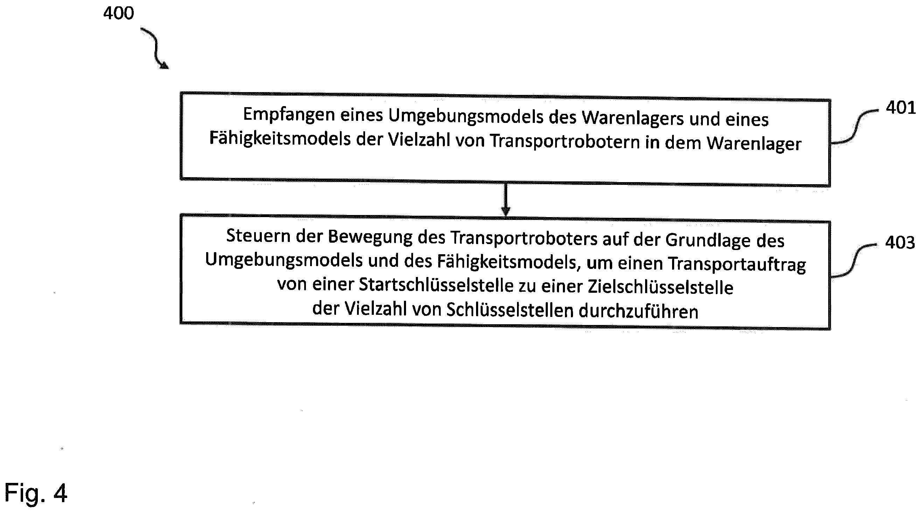

Figur 4 zeigt ein Flussdiagramm mit Schritten eines Verfahrens 400 zum Betreiben eines als Flurförderzeug ausgebildeten Transportroboters 120a, um Transportaufträge zum Transport von Waren 140 in einem Warenlager mit einer Vielzahl von als Flurförderzeugen ausgebildeten Transportrobotern 120a,b durchzuführen. Das Verfahren 400 umfasst einen Schritt 401 des Empfangens eines Umgebungsmodells 200 des Warenlagers und eines Fähigkeitsmodells der Vielzahl von Flurförderzeugen 120a,b in dem Warenlager. Gemäß einer Ausführungsform kann der Transportroboter 120a das Umgebungsmodell 200 des Warenlagers und/oder das Fähigkeitsmodell der Vielzahl von Flurförderzeugen 120a,b von der zentralen Steuervorrichtung 110 und/oder von einem anderen Flurförderzeug der Vielzahl von Flurförderzeugen empfangen, beispielsweise dem als Flurförderzeug ausgebildeten Transportroboter 120b.

Wie bereits vorstehend im Detail beschrieben, definiert das Umgebungsmodell 200 des Warenlagers eine Vielzahl von semantischen Schlüsselstellen 210a-h des Warenlagers und für jede Schlüsselstelle der Vielzahl von Schlüsselstellen 210a-h wenigstens eine benachbarte Schlüsselstelle und das Fähigkeitsmodel definiert für jede der Vielzahl von Schlüsselstellen 210a-h des Umgebungsmodells Bewegungsablaufinformationen, insbesondere zumindest eine Trajektorie 220a-c, für eine zumindest teilautomatisierte Bewegung zu der wenigstens einen benachbarten Schlüsselstelle. Für jede Schlüsselstelle der Vielzahl von Schlüsselstellen 210a-c des Umgebungsmodells 200 basieren erfindungsgemäß die Bewegungsablaufinformationen 220a-c, insbesondere die zumindest eine Trajektorie 220a-c, des Fähigkeitsmodells auf wenigstens einer durch Imitationslernen erlernten Bewegung eines zumindest zeitweise manuell betriebenen Flurförderzeugs 120b der Vielzahl von als Flurförderzeugen ausgebildeten Transportrobotern 120a,b zwischen der Schlüsselstelle und der wenigstens einen benachbarten Schlüsselstelle der Vielzahl von Schlüsselstellen 210a-c.

Ferner umfasst das Verfahren 400 einen Schritt 403 des Steuerns der Bewegung des als Flurförderzeug ausgebildeten Transportroboters 120a auf der Grundlage des Umgebungsmodells 200 und des Fähigkeitsmodells, um einen Transportauftrag von einer Startschlüsselstelle 210a zu einer Zielschlüsselstelle 210c der Vielzahl von Schlüsselstellen 210a-h durchzuführen. Wie bereits vorstehend beschrieben, kann diese Bewegung von der Startschlüsselstelle zu der Zielschlüsselstelle über eine oder mehrere Zwischenschlüsselstellen erfolgen.

Das erfindungsgemäße Verfahren 400 kann mittels des erfindungsgemäßen in Form eines Flurförderzeugs ausgebildeten Transportroboters 120a durchgeführt werden. Daher ergeben sich weitere Ausführungsformen des erfindungsgemäßen Verfahrens 400 aus den vorstehend beschriebenen Ausführungsformen des erfindungsgemäßen Transportroboters 120a.

## Patentansprüche

1. Transportroboter (120a), welcher betreibbar ist, um Transportaufträge zum Transport von Waren (140) in einem Warenlager mit einer Vielzahl von Transportrobotern (120a,b) durchzuführen, wobei der Transportroboter (120a) umfasst:
eine Kommunikationsschnittstelle (126), welche ausgebildet ist, ein Umgebungsmodell (200) des Warenlagers und ein Fähigkeitsmodell der Vielzahl von Transportrobotern (120a,b) in dem Warenlager zu empfangen, wobei das Umgebungsmodell (200) des Warenlagers eine Vielzahl von Schlüsselstellen (210a-c) des Warenlagers und für jede Schlüsselstelle (210a-c) wenigstens eine benachbarte Schlüsselstelle definiert und wobei das Fähigkeitsmodell für jede der Schlüsselstellen (210a-c) des Umgebungsmodells (200) Bewegungsablaufinformationen (220a-c) als zumindest eine Trajektorie (220a-c) für eine automatisierte Bewegung zu der wenigstens einen benachbarten Schlüsselstelle definiert, wobei für jede Schlüsselstelle der Vielzahl von Schlüsselstellen (210a-c) des Umgebungsmodells (200) die zumindest eine Trajektorie (220a-c) des Fähigkeitsmodells auf wenigstens einer durch Imitationslernen erlernten Bewegung eines manuell betriebenen Transportroboters (120b) der Vielzahl von Transportrobotern (120a,b) zwischen der Schlüsselstelle und der wenigstens einen benachbarten Schlüsselstelle basiert, wobei während des manuellen Betriebs der Transportroboter (120a,b) in dem Warenlager die Trajektorien (220a-c) aufgezeichnet und gesammelt werden, um das Fähigkeitsmodell zu generieren, wobei das Fähigkeitsmodell mit den Bewegungsablaufinformationen (220a-c), insbesondere Trajektorien (220a-c), für jede Schlüsselstelle (210a-c) des Umgebungsmodells (200) den Transportroboter (120a) befähigt, benachbarte Schlüsselstellen (210a-c) des Umgebungsmodells miteinander zu verbinden; und
eine Steuereinheit (123), welche zur Durchführung eines Transportauftrags von einer Startschlüsselstelle (210a) zu einer Zielschlüsselstelle (210c) der Vielzahl von Schlüsselstellen (210a-c) ausgebildet ist, die Bewegung des Transportroboters (120a) auf der Grundlage des Umgebungsmodells (200) und des Fähigkeitsmodells zu steuern.

2. Transportroboter (120a) nach Anspruch 1, wobei die Steuereinheit (123) zur Durchführung des Transportauftrags von der Startschlüsselstelle (210a) zu der Zielschlüsselstelle (210c) der Vielzahl von Schlüsselstellen (210a-c) ausgebildet ist, die Bewegung des Transportroboters (120a) auf der Grundlage des Umgebungsmodells (200) und erster Bewegungsablaufinformationen (220a) als eine erste Trajektorie (220a), und wenigstens zweiter Bewegungsablaufinformationen (220b) als eine zweite Trajektorie (220b) des Fähigkeitsmodells zu steuern, wobei die erste Trajektorie (220a) eine Bewegung von der Startschlüsselstelle (210a) zu einer der Startschlüsselstelle benachbarten Zwischenschlüsselstelle (210b) definiert und wobei die wenigstens zweite Trajektorie (220b) eine Bewegung von der Zwischenschlüsselstelle (210b) zu der Zielschlüsselstelle (210c) oder eine Bewegung von der Zwischenschlüsselstelle (210b) zu einer der Zwischenschlüsselstelle (210b) benachbarten weiteren Zwischenschlüsselstelle definiert.

3. Transportroboter (120a) nach Anspruch 2, wobei die Steuereinheit (123) ferner ausgebildet ist, nach der Bewegung des Transportroboters (120a) von der Startschlüsselstelle (210a) zu der Zwischenschlüsselstelle (210b) auf der Grundlage der ersten Trajektorie (220a) eine Abweichung einer Ist-Position oder Ist-Pose (240b) von einer Soll-Position oder Soll-Pose (240b') des Transportroboters (120a) relativ zu der Zwischenschlüsselstelle (210b) zu bestimmen und die Bewegung des Transportroboters (120a) von der Zwischenschlüsselstelle (210b) zu der Zielschlüsselstelle (210c) oder der weiteren Zwischenschlüsselstelle auf der Grundlage der zweiten Trajektorie (220b) zu variieren, um der Abweichung der Ist-Position oder Ist-Pose (240b) von der Soll-Position oder Soll-Pose (240b') entgegen zu wirken.

4. Transportroboter (120a) nach Anspruch 2 oder 3, wobei die Steuereinheit (123) ferner ausgebildet ist, mithilfe einer Kostenfunktion die Bewegung des Transportroboters (120a) von der Startschlüsselstelle (210a) zu der Zielschlüsselstelle (210c) über die einen oder mehreren dazwischen liegenden Zwischenschlüsselstellen (210b) zu bestimmen.

5. Transportroboter (120a) nach einem der vorhergehenden Ansprüche, wobei jede Schlüsselstelle der Vielzahl von Schlüsselstellen (210a-c) eine Markierung (230a,b) aufweist und wobei der Transportroboter (120a) ferner eine Sensoreinheit (130a) aufweist, welche ausgebildet ist, die Markierung (230a,b) einer jeweiligen Schlüsselstelle (210a-c) zu erfassen und die jeweilige Schlüsselstelle (210a-c) auf der Grundlage der erfassten Markierung (230a,b) zu identifizieren.

6. Transportroboter (120a) nach Anspruch 5, wobei die Steuereinheit (123) ausgebildet ist, auf der Grundlage der von der Sensoreinheit (130a) erfassten Markierung (230a,b) einer jeweiligen Schlüsselstelle (210a-c) die Position oder Pose (240b,c) des Transportroboters (120a) relativ zu der jeweiligen Schlüsselstelle (210a-c) zu bestimmen.

7. Transportroboter (120a) nach Anspruch 6, wobei die Markierung (230a,b) eine visuelle Markierung (230a,b) ist und wobei die Sensoreinheit (130a) eine Kamera (130a), insbesondere eine Tiefenbildkamera (130a) zum Erfassen der visuellen Markierung (230a,b) umfasst.

8. Transportroboter (120a) nach einem der vorhergehenden Ansprüche, wobei der Transportroboter (120a) ferner eine Antriebseinheit (121) umfasst, welche ausgebildet ist, auf der Grundlage von Bewegungssteuersignalen von der Steuereinheit (123) die Bewegung des Transportroboters (120a) anzutreiben.

9. Transportroboter (120a) nach einem der vorhergehenden Ansprüche, wobei der Transportroboter (120a) als Flurförderzeug (120a), insbesondere als Gabelstapler (120a), ausgebildet ist.

10. System (100) zum Betreiben einer Vielzahl von Transportrobotern (120a,b) in einem Warenlager, wobei das System (100) umfasst:
eine Vielzahl von Transportrobotern (120a,b) nach einem der vorhergehenden Ansprüche; und
eine zentrale Vorrichtung (110) zum Betreiben der Vielzahl von Transportrobotern (120a,b) in dem Warenlager, wobei die zentrale Vorrichtung (110) ausgebildet ist, einem Transportroboter der Vielzahl von Transportrobotern (120a,b) das Umgebungsmodell (200) des Warenlagers und das Fähigkeitsmodell der Vielzahl von Transportrobotern (120a,b) bereitzustellen.

11. Verfahren (400) zum Betreiben eines Transportroboters (120a), welcher betreibbar ist, um Transportaufträge zum Transport von Waren (140) in einem Warenlager mit einer Vielzahl von Transportrobotern (120a,b) durchzuführen, wobei das Verfahren (400) umfasst:
Empfangen (401) eines Umgebungsmodells (200) des Warenlagers und eines Fähigkeitsmodells der Vielzahl von Transportrobotern (120a,b) in dem Warenlager, wobei das Umgebungsmodell (200) des Warenlagers eine Vielzahl von Schlüsselstellen (210a-c) des Warenlagers und für jede Schlüsselstelle (210a-c) wenigstens eine benachbarte Schlüsselstelle definiert und wobei das Fähigkeitsmodell für jede der Schlüsselstellen (210a-c) des Umgebungsmodells Bewegungsablaufinformationen (220a-c) als zumindest eine Trajektorie (220a-c) für eine automatisierte Bewegung zu der wenigstens einen benachbarten Schlüsselstelle definieren, wobei für jede Schlüsselstelle der Vielzahl von Schlüsselstellen (210a-c) des Umgebungsmodells (200) die zumindest eine Trajektorie (220a-c) des Fähigkeitsmodells auf wenigstens einer durch Imitationslernen erlernten Bewegung eines manuell betriebenen Transportroboters (120b) der Vielzahl von Transportrobotern (120a,b) zwischen der Schlüsselstelle und der wenigstens einen benachbarten Schlüsselstelle basieren, wobei während des manuellen Betriebs der Transportroboter (120a,b) in dem Warenlager die Trajektorien (220a-c) aufgezeichnet und gesammelt werden, um das Fähigkeitsmodell zu generieren, wobei das Fähigkeitsmodell mit den Bewegungsablaufinformationen (220a-c), insbesondere Trajektorien (220a-c), für jede Schlüsselstelle (210a-c) des Umgebungsmodells (200) den Transportroboter (120a) befähigt, benachbarte Schlüsselstellen (210a-c) des Umgebungsmodells miteinander zu verbinden; und
Steuern (403) der Bewegung des Transportroboters (120a) auf der Grundlage des Umgebungsmodells und des Fähigkeitsmodells, um einen Transportauftrag von einer Startschlüsselstelle (210a) zu einer Zielschlüsselstelle (210c) der Vielzahl von Schlüsselstellen (210a-c) durchzuführen.

## Claims

1. Transport robot (120a) which is operable so as to carry out transport orders for transporting goods (140) in a warehouse with a multiplicity of transport robots (120a,b), wherein the transport robot (120a) comprises:
a communication interface (126) which is designed to receive a surroundings model (200) of the warehouse and a capability model of the multiplicity of transport robots (120a,b) in the warehouse, wherein the surroundings model (200) of the warehouse defines a multiplicity of key locations (210a-c) of the warehouse and, for each key location (210a-c), at least one adjacent key location, and wherein, for each of the key locations (210a-c) of the surroundings model (200), the capability model defines items of movement sequence information (220a-c) as at least one trajectory (220a-c) for automated movement to the at least one adjacent key location, wherein, for each key location of the multiplicity of key locations (210a-c) of the surroundings model (200), the at least one trajectory (220a-c) of the capability model is based on at least one movement learned by imitation learning of a manually operated transport robot (120b) of the multiplicity of transport robots (120a,b) between the key location and the at least one adjacent key location, wherein the trajectories (220a-c) are recorded and collected during manual operation of the transport robots (120a,b) in the warehouse in order to generate the capability model, wherein the capability model, by way of the items of movement sequence information (220a-c), in particular trajectories (220a-c), for each key location (210a-c) of the surroundings model (200), enables the transport robot (120a) to connect adjacent key locations (210a-c) of the surroundings model to one another; and
a control unit (123) which, for carrying out a transport order from a starting key location (210a) to a target key location (210c) of the multiplicity of key locations (210a-c), is designed to control the movement of the transport robot (120a) on the basis of the surroundings model (200) and the capability model.

2. Transport robot (120a) according to Claim 1, wherein the control unit (123), for carrying out the transport order from the starting key location (210a) to the target key location (210c) of the multiplicity of key locations (210a-c), is designed to control the movement of the transport robot (120a) on the basis of the surroundings model (200) and first items of movement sequence information (220a) as a first trajectory (220a) and at least second items of movement sequence information (220b) as a second trajectory (220b) of the capability model, wherein the first trajectory (220a) defines a movement from the starting key location (210a) to an intermediate key location (210b) adjacent to the starting key location, and wherein the at least second trajectory (220b) defines a movement from the intermediate key location (210b) to the target key location (210c) or a movement from the intermediate key location (210b) to a further intermediate key location adjacent to the intermediate key location (210b).

3. Transport robot (120a) according to Claim 2, wherein the control unit (123) is further designed, after the movement of the transport robot (120a) from the starting key location (210a) to the intermediate key location (210b) on the basis of the first trajectory (220a), to determine a deviation in an actual position or actual pose (240b) from a desired position or desired pose (240b') of the transport robot (120a) relative to the intermediate key location (210b) and to vary the movement of the transport robot (120a) from the intermediate key location (210b) to the target key location (210c) or the further intermediate key location on the basis of the second trajectory (220b) in order to counteract the deviation in the actual position or actual pose (240b) from the desired position or desired pose (240b').

4. Transport robot (120a) according to Claim 2 or 3, wherein the control unit (123) is further designed to determine the movement of the transport robot (120a) from the starting key location (210a) to the target key location (210c) via the one or more intermediate key locations (210b) situated therebetween using a cost function.

5. Transport robot (120a) according to any of the preceding claims, wherein each key location of the multiplicity of key locations (210a-c) has a marker (230a,b) and wherein the transport robot (120a) further has a sensor unit (130a) which is designed to detect the marker (230a,b) of a respective key location (210a-c) and identify the respective key location (210a-c) on the basis of the detected marker (230a,b).

6. Transport robot (120a) according to Claim 5, wherein the control unit (123) is designed to determine the position or pose (240b,c) of the transport robot (120a) relative to the respective key location (210a-c) on the basis of the marker (230a,b) of a respective key location (210a-c) detected by the sensor unit (130a).

7. Transport robot (120a) according to Claim 6, wherein the marker (230a,b) is a visual marker (230a,b) and wherein the sensor unit (130a) comprises a camera (130a), in particular a depth camera (130a), for detecting the visual marker (230a,b).

8. Transport robot (120a) according to any of the preceding claims, wherein the transport robot (120a) further comprises a drive unit (121) which is designed to drive the movement of the transport robot (120a) on the basis of movement control signals from the control unit (123).

9. Transport robot (120a) according to any of the preceding claims, wherein the transport robot (120a) is designed as an industrial truck (120a), in particular a forklift truck (120a).

10. System (100) for operating a multiplicity of transport robots (120a,b) in a warehouse, wherein the system (100) comprises:
a multiplicity of transport robots (120a,b) according to any of the preceding claims; and
a central device (110) for operating the multiplicity of transport robots (120a,b) in the warehouse, wherein the central device (110) is designed to provide the surroundings model (200) of the warehouse and the capability model of the multiplicity of transport robots (120a,b) to a transport robot of the multiplicity of transport robots (120a,b).

11. Method (400) for operating a transport robot (120a) which is operable so as to carry out transport orders for transporting goods (140) in a warehouse with a multiplicity of transport robots (120a,b), wherein the method (400) comprises:
receiving (401) a surroundings model (200) of the warehouse and a capability model of the multiplicity of transport robots (120a,b) in the warehouse, wherein the surroundings model (200) of the warehouse defines a multiplicity of key locations (210a-c) of the warehouse and, for each key location (210a-c), at least one adjacent key location, and wherein, for each of the key locations (210a-c) of the surroundings model, the capability model defines items of movement sequence information (220a-c) as at least one trajectory (220a-c) for automated movement to the at least one adjacent key location, wherein, for each key location of the multiplicity of key locations (210a-c) of the surroundings model (200), the at least one trajectory (220a-c) of the capability model is based on at least one movement learned by imitation learning of a manually operated transport robot (120b) of the multiplicity of transport robots (120a,b) between the key location and the at least one adjacent key location, wherein the trajectories (220a-c) are recorded and collected during manual operation of the transport robots (120a,b) in the warehouse in order to generate the capability model, wherein the capability model, by way of the items of movement sequence information (220a-c), in particular trajectories (220a-c), for each key location (210a-c) of the surroundings model (200), enables the transport robot (120a) to connect adjacent key locations (210a-c) of the surroundings model to one another; and
controlling (403) the movement of the transport robot (120a) on the basis of the surroundings model and the capability model in order to carry out a transport order from a starting key location (210a) to a target key location (210c) of the multiplicity of key locations (210a-c).

## Revendications

1. Robot de transport (120a), qui peut fonctionner pour exécuter des ordres de transport pour le transport de marchandises (140) dans un entrepôt de marchandises avec une pluralité de robots de transport (120a, b), le robot de transport (120a) comprenant :
une interface de communication (126), qui est formée pour recevoir un modèle d'environnement (200) de l'entrepôt de marchandises et un modèle de capacité de la pluralité de robots de transport (120a, b) dans l'entrepôt de marchandises, le modèle d'environnement (200) de l'entrepôt de marchandises définissant une pluralité d'emplacements clés (210a-c) de l'entrepôt de marchandises et au moins un emplacement clé adjacent pour chaque emplacement clé (210a-c) et le modèle de capacité définissant des informations de séquence de déplacement (220a-c) comme au moins une trajectoire (220a-c) pour un déplacement automatisé vers l'au moins un emplacement clé adjacent pour chacun des emplacements clés (210a-c) du modèle d'environnement (200), l'au moins une trajectoire (220a-c) du modèle de capacité se basant, pour chaque emplacement clé de la pluralité d'emplacements clés (210s-c) du modèle d'environnement (200), sur au moins un déplacement, appris par apprentissage par imitation, d'un robot de transport (120b) à fonctionnement manuel de la pluralité de robots de transport (120a, b) entre l'emplacement clé et l'au moins un emplacement clé adjacent, les trajectoires (220a-c) étant enregistrées et collectées pendant le fonctionnement manuel des robots de transport (120a, b) dans l'entrepôt de marchandises pour générer le modèle de capacité, le modèle de capacité avec les informations de séquence de déplacement (220a - c), en particulier les trajectoires (220a-c), pour chaque emplacement clé (210a-c) du modèle d'environnement (200) permettant au robot de transport (120a) de relier des emplacements clés adjacents (210a-c) du modèle d'environnement les uns aux autres ; et
une unité de commande (123), qui est formée pour exécuter une tâche de transport d'un emplacement de clé de départ (210a) à un emplacement clé cible (210c) de la pluralité d'emplacements clés (210a-c), pour commander le déplacement du robot de transport (120a) sur la base du modèle d'environnement (200) et du modèle de capacité.

2. Robot de transport (120a) selon la revendication 1, l'unité de commande (123) étant formée pour exécuter l'ordre de transport de l'emplacement clé de départ (210a) à l'emplacement clé cible (200c) de la pluralité d'emplacements clés (220a-c), pour commander le déplacement du robot de transport (120a) sur la base du modèle d'environnement (200) et de premières informations de séquence de déplacement (220a) comme première trajectoire (220a), et au moins de deuxièmes informations de séquence de déplacement (220b) en tant que deuxième trajectoire (220b) du modèle de capacité, la première trajectoire (220a) définissant un déplacement de l'emplacement clé de départ (210a) à un emplacement clé intermédiaire (210b) adjacent à l'emplacement clé de départ et l'au moins deuxième trajectoire (220b) définissant un déplacement de l'emplacement clé intermédiaire (210b) à l'emplacement clé cible (210c) ou un déplacement de l'emplacement clé intermédiaire (210b) à un autre emplacement clé intermédiaire adjacent à l'emplacement clé intermédiaire (210b).

3. Robot de transport (120a) selon la revendication 2, l'unité de commande (123) étant en outre formée pour définir, après le déplacement du robot de transport (120a) de l'emplacement clé de départ (210a) à l'emplacement clé intermédiaire (210b) sur la base de la première trajectoire (220a), un écart d'une position réelle ou d'une pose réelle (240b) par rapport à une position de consigne ou une pose de consigne (240b') du robot de transport (120a) par rapport à l'emplacement clé intermédiaire (210b) et faire varier le déplacement du robot de transport (120a) depuis l'emplacement clé intermédiaire (210b) à l'emplacement clé cible (210c) ou à l'autre emplacement clé intermédiaire sur la base de la deuxième trajectoire (220b) pour contrecarrer l'écart de la position réelle ou de la pose réelle (240b) par rapport à la position de consigne ou à la pose de consigne (240b').

4. Robot de transport (120a) selon la revendication 2 ou 3, l'unité de commande (123) étant en outre formée pour définir, à l'aide d'une fonction de coût, le déplacement du robot de transport (120a) de l'emplacement clé de départ (210a) à l'emplacement clé cible (210c) par le ou les plusieurs emplacements clés intermédiaires (210b) situés entre eux.

5. Robot de transport (120a) selon l'une des revendications précédentes, chaque emplacement clé de la pluralité d'emplacements clés (210a-c) comportant un marquage (230a, b) et le robot de transport (120a) comportant en outre une unité de détection (130a), qui est formée pour détecter le marquage (230a, b) d'un emplacement clé (210a-c) respectif et pour identifier l'emplacement clé (210a-c) respectif sur la base du marquage (230a, b) détecté.

6. Robot de transport (120a) selon la revendication 5, l'unité de commande (123) étant formée pour définir la position ou la pose (240b, c) du robot de transport (120a) par rapport à l'emplacement clé (210a-c) respectif sur la base du marquage (230a, b) d'un emplacement clé (210a-c) respectif détecté par l'unité de détection (130a).

7. Robot de transport (120a) selon la revendication 6, le marquage (230a, b) étant un marquage visuel (230a, b) et l'unité de détection (130a) comprenant une caméra (130a), en particulier une caméra d'image de profondeur (130a), pour détecter le marquage visuel (230a, b).

8. Robot de transport (120a) selon l'une des revendications précédentes, le robot de transport (120a) comprenant en outre une unité d'entraînement (121) qui est formée pour entraîner le déplacement du robot de transport (120a) sur la base de signaux de commande de déplacement provenant de l'unité de commande (123).

9. Robot de transport (120a) selon l'une des revendications précédentes, le robot de transport (120a) étant formé comme un chariot de manutention (120a), en particulier comme un chariot élévateur (120a).

10. Système (100) permettant de faire fonctionner une pluralité de robots de transport (120a, b) dans un entrepôt de marchandises, le système (100) comprenant :
une pluralité de robots de transport (120a, b) selon l'une des revendications précédentes ; et
un dispositif central (110) pour faire fonctionner la pluralité de robots de transport (120a, b) dans l'entrepôt de marchandises, le dispositif central (110) étant formé pour fournir à un robot de transport de la pluralité de robots de transport (120a, b) le modèle d'environnement (200) de l'entrepôt de marchandises et le modèle de capacité de la pluralité de robots de transport (120a, b).

11. Procédé (400) permettant de faire fonctionner un robot de transport (120a), qui peut fonctionner pour exécuter des ordres de transport pour transporter des marchandises (140) dans un entrepôt de marchandises avec une pluralité de robots de transport (120a, b), le procédé (400) comprenant :
réception (401) d'un modèle d'environnement (200) de l'entrepôt de marchandises et d'un modèle de capacité de la pluralité de robots de transport (120a, b) dans l'entrepôt de marchandises, le modèle d'environnement (200) de l'entrepôt de marchandises définissant une pluralité d'emplacements clés (210a-c) de l'entrepôt de marchandises et au moins un emplacement clé adjacent pour chaque emplacement clé (210a-c), et le modèle de capacité définissant des informations de séquence de déplacement (220a-c) comme au moins une trajectoire (220a-c) pour un déplacement automatisé vers l'au moins un emplacement clé adjacent pour chacun des emplacements clés (210a-c) du modèle d'environnement, l'au moins une trajectoire (220a-c) du modèle de capacité se basant, pour chaque emplacement clé de la pluralité d'emplacements clés (210a-c) du modèle d'environnement (200), sur au moins un déplacement, appris par apprentissage par imitation, d'un robot de transport (120b) à fonctionnement manuel de la pluralité de robots de transport (120a, b) entre l'emplacement clé et l'au moins un emplacement clé adjacent, les trajectoires (220a-c) étant enregistrées et collectées pendant le fonctionnement manuel des robots de transport (120a, b) dans l'entrepôt de marchandises pour générer le modèle de capacité, le modèle de capacité avec les informations de séquence de déplacement (220a-c), en particulier les trajectoires (220a-c), pour chaque emplacement clé (210a-c) du modèle d'environnement (200) permettant au robot de transport (120a) de relier des emplacements clés adjacents (210a-c) du modèle d'environnement les uns aux autres ; et
commande (403) du déplacement du robot de transport (120a) sur la base du modèle d'environnement et du modèle de capacité pour exécuter un ordre de transport depuis un emplacement clé de départ (210a) à un emplacement clé cible (210c) parmi la pluralité d'emplacements clés (210a-c) .
